# EUROPÄISCHE PATENTSCHRIFT

(11) **EP 1 965 160 B1**
(45) Veröffentlichungstag und Bekanntmachung des Hinweises auf die Patenterteilung: **25.05.2022**
(21) Anmeldenummer: 08003323.6
(22) Anmeldetag: 23.02.2008
(51) Int. Cl.: F25B 41/31, F25B 49/02

(54) **Verfahren zum Steuern einer Kompressionskälteanlage und eine Kompressionskälteanlage**
Method for operating a compression cooling assembly and compression cooling assembly
Procédé destiné à la commande d'une installation de refroidissement à compression et installation de refroidissement à compression

(30) Priorität: 02.03.2007 DE 102007010645
(43) Veröffentlichungstag der Anmeldung: 03.09.2008
(60) Teilanmeldung: 20202853.6
(73) Patentinhaber: Stiebel Eltron GmbH & Co. KG, 37603 Holzminden (DE)
(72) Erfinder: Smollich, Steffen, 37603 Holminden (DE); Herrs, Martin, 37671 Höxter (DE)

(56) Entgegenhaltungen:
- EP-A- 1 225 406
- EP-A- 1 394 484
- EP-A2- 1 965 158
- DE-A1- 3 720 889
- JP-A- 4 240 355
- JP-A- 4 340 056
- JP-A- 9 264 616

## Beschreibung

Die Erfindung betrifft ein Verfahren zum Steuern einer Kompressionskälteanlage.

Bei einer Kompressionskälteanlage wird das im Kältekreis der Kompressionskälteanlage befindliche Kältemittel im Verdampfer durch Wärmeentzug des zu kühlenden Mediums verdampft. Im Verdichter erfolgt eine Druck- und damit Temperaturerhöhung des Kältemittels. Anschließend wird das Kältemittel im Verflüssiger unter Wärmeabgabe wieder verflüssigt. Durch das Drosselorgan wird das Kältemittel wieder auf den Verdampfungsdruck entspannt.

Derartige Kompressionskälteanlagen werden z.B. für die Beheizung von Räumen und für die Warmwasserbereitung eingesetzt, wobei die Beheizung von Räumen und die Warmwasserbereitung jeweils als Wärmesenken bezeichnet werden.

JP-A-04240355 offenbart ein Verfahren zum Steuern eines elektrischen Expansionsventils einer Klimaanlage mit den Schritten: Wenn ein elektronisches Expansionsventil basierend auf Signalen eines Saugtemperatursensors, eines Sättigungstemperatursensors und eines Drucktemperatursensors durch eine Steuerung gesteuert wird, wird zum Zeitpunkt der Inbetriebnahme eines Vorgangs eine Überhitzungsregelung durchgeführt. Das heißt, das Ventil wird so gesteuert, dass die Überhitzungsmenge, die durch eine Temperaturdifferenz zwischen der Saugtemperatur und der gesättigten Temperatur erhalten wird, zu einem vorgegebenen Wert wird. Wenn die Entladetemperatur während der Überhitzungsregelung eine eingestellte Temperatur (zulässige Grenztemperatur) erreicht oder überschreitet, wird die Entladetemperaturregelung ausgeführt. Das heißt, das Ventil wird so gesteuert, dass die Auslauftemperatur konstant wird, und wenn die Überhitzungsmenge während der Auslauftemperaturregelung einen Sollwert überschreitet, wird sie wieder an die Überhitzungsregelung zurückgeführt. Das Dokumente JP 4 240355 A offenbart ein Verfahren zum Steuern einer Kälteanlage gemäß dem Oberbegriff von Anspruch 1.

Die Klimaanlage der DE 37 20 889 A1 hat einen Kompressor, ein Vierwegeventil, einen Innenraumwärmeaustauscher, ein Expansionsventil und einen Außenraumwärmeaustauscher, die über Leitungen unter Bildung eines Wärmepumpenkältemittelkreislaufes zusammengeschlossen sind. Das Vierwegeventil ist so umschaltbar, dass ein Heizmodus oder Kühlmodus gewählt werden kann. Die Klimaanlage hat weiterhin eine erste Zweigleitung und eine zweite Zweigleitung, die sich von einer Auslassleitung des Kompressors aus erstrecken. Die erste Zweigleitung, die einen ersten Bypass bildet, ist mit einer Einlassleitung des Kompressors verbunden. Die erste und zweite Zweigleitung haben ein erstes bzw. zweites Ventil. Die Klimaanlage ist weiterhin mit einem Mikrocomputer für das selektive Öffnen und Schließen des zweiten Ventils entsprechend dem Überhitzungsgrad des geförderten gasförmigen Kältemittels versehen, nachdem das erste Ventil geöffnet worden ist, so dass das geförderte gasförmige Kältemittel zu dem Außenraumwärmeaustauscher geführt wird und dort einen Abtauvorgang bewirkt, während mit dem Heizbetrieb fortgefahren wird. Wenn der Überhitzungsgrad des geförderten gasförmigen Kältemittels niedrig ist, wird ein Teil des geförderten Gases der Einlassleitung zugeführt, um so den Überhitzungsgrad zu regulieren.

Die Regelung der Wärmesenkentemperatur erfolgt üblicherweise durch Ein- und Ausschalten des Verdichters bzw. durch Modulation der Verdichterdrehzahl. Solche Verfahren sind beispielsweise aus der EP 1 355 207 A1 oder DE 43 03 533 A1 bekannt. Weiterhin soll der Wirkungsgrad des Verdampfers und damit des Kältekreises mittels der Regelung optimiert werden. Der Wirkungsgrad des Verdampfers hängt u.a. von seinem Befüllungsgrad ab, d. h. welcher Teil des Verdampfers mit Nassdampf und welcher Teil des Verdampfers mit überhitztem (dampfförmigem) Kältemittel gefüllt ist. Je höher der Nassdampfanteil ist, desto geringer ist die Überhitzung und desto besser ist der Wirkungsgrad. Somit wird die Kälteanlage geregelt, um eine gewünschte Überhitzung vorzusehen, damit das Kältemittel kurz vor Eintritt in den Verdichter komplett verdampft ist.

Ist jedoch der gesamte Verdampfer mit Nassdampf gefüllt und gelangt nicht überhitzter Nassdampf in den Verdichter, so kann dies zu Verdichterschäden führen. Aber auch eine zu geringe Füllmenge von Kältemittel im Kältekreis kann den Wirkungsgrad des Kältekreises ungünstig beeinflussen, so dass ein wirkungsgradoptimierter Füllgrad des Verdampfers mit Nassdampf nicht mehr gewährleistet sein kann.

Als Regelgröße für die Verdampferregelung kann die Überhitzung des Kältemittels am Verdampferausgang verwendet werden. Diese Überhitzung des Kältemittels lässt sich bevorzugt aus dem Verdampferdruck po und der Temperatur T₀ₕ des überhitzten Kältemittels am Verdampferausgang bestimmen, welche sich durch geeignete Messaufnehmer bestimmen lassen. Die Differenz aus Verdampferausgangstemperatur T₀ₕ und der Verdampfungstemperatur To, welche die Temperatur des Kältemittels während der Verdampfung ohne Überhitzung repräsentiert, wird berechnet und stellt die Ist-Überhitzung ΔT₀ₕ₋ᵢₛₜ des Kältemittels am Verdampferausgang, im Folgenden auch kurz Überhitzung genannt, dar.

Der Erfindung liegt die Aufgabe zu Grunde, ein verbessertes Verfahren zur Steuerung einer (Kompressions)Kälteanlage vorzusehen. Diese Aufgabe wird durch ein Verfahren zum Steuern einer (Kompressions)Kälteanlage gemäß Anspruch 1 gelöst.

Somit wird ein Verfahren zum Steuern einer Kälteanlage, welche ein Kältemittel, einen Verdampfer, einen Verdichter, einen Verflüssiger und ein elektronisch ansteuerbares Drosselorgan aufweist, vorgesehen, das die folgenden Schritte enthält: Durchführen einer Überhitzungsregelung des Kältemittels am Verdampferausgang durch einen Regler durch Steuern des Öffnungsgrades des elektrisch einstellbaren Drosselorgans, Aktivierung einer Sonderfunktions-Regelung durch einen Sonderfunktionsregler, wenn sich die Kälteanlage in einer bestimmten Betriebsart befindet, wobei die Sonderfunktions-Regelung des Sonderfunktionsreglers in die Überhitzungsregelung des Kältemittels am Verdampferausgang durch den Regler eingreift, wobei eine Adaptionseinheit der Steuerung der Adaption der Regeldynamik dient, die Parametrierung des Reglers für die Überhitzung des Kältemittels am Verdampferausgang optimal an den aktuellen Arbeitspunkt der Regelstrecke Kältekreis angepasst wird, eine Übertragungskennlinie eines Kältemittels davon geprägt ist, dass die Steilheit der Abhängigkeit zwischen Öffnungsgradänderung des Expansionsventils und Überhitzungsänderung des Kältemittels am Verdampferausgang nicht konstant ist, eine Kennlinie ist in der Adaptionseinheit zur Adaption der Regeldynamik abgelegt, welche die Regelparameter in der ersten Bestimmungseinheit in Abhängigkeit des Sollwerts der Überhitzung des Kältemittels am Verdampferausgang beeinflusst, eine optimale Anpassung des Reglers an den aktuellen Arbeitspunkt des Kältekreises durch Anpassung der Parametrierung des Reglers für die Überhitzung des Kältemittels am Verdampferausgang erfolgt, eine Freigabe der Sonderfunktion Adaption der Regeldynamik durch die Erkennungseinheit gesteuert wird, und Beenden der Sonderfunktions-Regelung, wenn die Kälteanlage wieder in den Normalbetrieb, bei dem eine Überhitzungsregelung des Kältemittels am Verdampferausgang durch einen Regler erfolgt, wechselt.

Gemäß einem Beispiel ist eine Kälteanlage mit einem Kältemittel, einem Verdampfer, einem Verdichter, einem Verflüssiger und einem elektronisch einstellbaren Drosselorgan, und einer ersten Regelungseinheit, die dazu eingerichtet ist, die Überhitzung des Kältemittels am Verdampferausgang in einer ersten Betriebsart Heizen oder in einer zweiten Betriebsart Kühlen durch Steuern des Öffnungsgrades des elektronisch einstellbaren Drosselorgans zu regeln, und einer zweiten Regelungseinheit, die dazu eingerichtet ist, die Sonderfunktionen in der ersten oder zweiten Betriebsart der Kälteanlage oder nach einer Verzögerungszeit nach einem Wechsel der Betriebsarten zu regeln, wobei die Regelung von Sonderfunktionen in die Regelung der ersten Regelungseinheit eingreift, wobei die zweite Regelungseinheit eine Adaptionseinheit aufweist, die dazu eingerichtet ist, die Parametrierung der ersten Regelungseinheit zum Regeln der Überhitzung des Kältemittels am Verdampferausgang zu adaptieren, wobei die Adaptionseinheit dazu ausgestaltet ist, die Adaption der Parametrierung der ersten Regelungseinheit nach einer Verzögerungszeit nach dem Wechsel der Betriebsart zu aktivieren. Die Erfindung betrifft den Gedanken, ein Verfahren zur Steuerung eines Kältekreises einer Kälteanlage vorzusehen. Ein Kältekreis einer Kälteanlage wird dabei mittels einer Reglerfunktion zur Überhitzungsregelung des Kältemittels am Verdampferausgang geregelt. Wenn eine Situation auftritt, bei der die Überhitzungsregelung des Kältemittels am Verdampferausgang nicht ausreicht, um die Kälteanlage optimal zu regeln, dann werden Stellsignale oder Diagnosewerte durch zusätzliche Regler oder Überwachungsfunktionen erzeugt, welche durch Prozesswerte aus dem Kältekreis beeinflusst werden können. Diese weiteren Stellsignale nehmen Einfluss auf die Parametrierung, die Stellsignalerzeugung und die funktionale Verschaltung der Reglerfunktion zur Überhitzungsregelung. Wenn festgestellt wird, dass die zusätzliche Regelung nicht mehr benötigt wird, dann erfolgt die Regelung wieder basierend auf der Überhitzungsregelung des Kältemittels am Verdampferausgang.

Die Erfindung beruht auf dem Gedanken, ein Verfahren zum Steuern der Kompressionskälteanlage vorzusehen, bei der abhängig von der Betriebsart des Kältekreisreglers und vom Arbeitspunkt des Kältekreises Prozessgrößen regeltechnisch in die Überhitzungsregelung einzubinden, welche nicht unmittelbar zur Bestimmung und Regelung der Überhitzung erforderlich sind. Ferner können Verfahren zur Selbstdiagnose des Kältekreisreglers und des Kältekreises und seiner Komponenten im Regler implementiert werden.

Im Folgenden wird die Erfindung anhand eines Ausführungsbeispiels und mit Bezug auf die beigefügten Zeichnungen veranschaulicht. Es zeigen:
Fig. 1 eine schematische Darstellung einer Kompressionskälteanlage , die nicht Teil der Erfindung ist, und
Fig. 2 ein schematisches Blockdiagramm eines Reglers gemäß einem Ausführungsbeispiel.

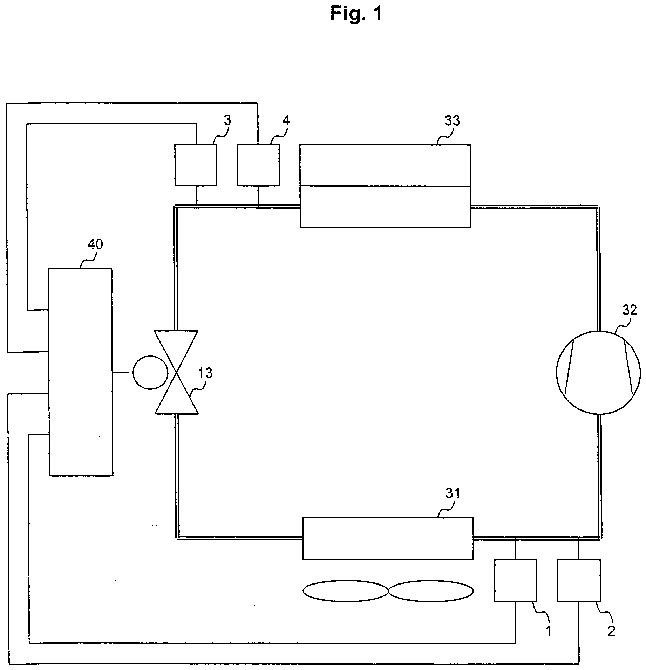

Fig. 1 zeigt eine schematische Darstellung einer Kompressionskälteanlage, die nicht Teil der Erfindung ist. Eine Kälteanlage weist einen Verdampfer 31, einen Verdichter 32, einen Verflüssiger 33 und ein Drosselorgan 13 auf, welche durch ein Kältemittel-Leitungssystem verbunden sind. Ferner sind eine erste, eine zweite, eine dritte und eine vierte Messeinheit 1 - 4 vorgesehen. Die erste Messeinheit 1 dient dazu, die Temperatur des verdampften Kältemittels zu messen. Die zweite Messeinheit 2 dient dazu, den Verdampferausgangsdruck zu messen. Die dritte Messeinheit 3 dient dazu, die Temperatur des verflüssigten Kältemittels zu messen. Die vierte Messeinheit 4 dient dazu, den Verflüssigerdruck zu messen. Die erste, zweite, dritte und vierte Messeinheit 1 - 4 sind jeweils mit einem Regler 40 gekoppelt, welcher das Expansionsventil 13 steuert. In den Figuren wird ein Expansionsventil als Drosselorgan 13 verwendet.

Durch Wärmezufuhr auf niedrigem Temperaturniveau wird ein Medium mit tiefem Siedepunkt ("Kältemittel", heute meist Ozon-unschädliche FCKWs oder natürliche Stoffe) im Verdampfer 31 verdampft, die gasförmige Phase wird dann in dem Verdichter 32 verdichtet und dadurch erhitzt. Unter hohem Druck stehend gibt das Arbeitsmittel bzw. das Kältemittel seine Wärme zur Nutzung am Verflüssiger 33 ab (Heizungswasser, Luftstrom) und kondensiert dabei. Durch ein Expansionsventil 13 tritt das Arbeitsmittel wieder in den Teilkreislauf mit geringem Druck ein und wird wiederum dem Verdampfer 31 zugeführt, an dessen Ausgang der Verdampferdruck mit der zweiten Messeinheit 2 und die Temperatur des verdampften Kältemittels mit der ersten Messeinheit 1 bestimmt wird. Aus dem ermittelten Verdampferausgangsdruck und der Temperatur des verdampften Kältemittels am Verdampferausgang lässt sich die Überhitzung des Kältemittels am Verdampferausgang mit Hilfe von Kältemitteldaten bestimmen.

Die Temperaturdifferenz zwischen der Wärmequelle und dem Kältemittel ermöglicht einen Wärmestrom zum Verdampfer 31. Anschließend wird der Kältemitteldampf vom Verdichter 32 angesaugt und komprimiert. Die Temperatur des Kältemittels wird dabei auf ein höheres Temperaturniveau "gepumpt", welches i. A. oberhalb dessen der Wärmeverteilung liegt. Am Verflüssiger 33 liegt wieder eine Temperaturdifferenz vor, und es kommt zu einem Wärmestrom, d. h. zur Wärmeverteilung. Das unter Hochdruck stehende Kältemittel kühlt wieder ab und kondensiert. Am Ausgang des Verflüssigers 33 wird der Verflüssigerdruck mit der vierten Messeinheit 4 und die Temperatur des verflüssigten Kältemittels mit der dritten Messeinheit 3 bestimmt. Anschließend wird das Kältemittel über ein Expansionsventil 13 entspannt. Der gesamte Vorgang erfolgt erneut und befindet sich dadurch in einem Kreisprozess.

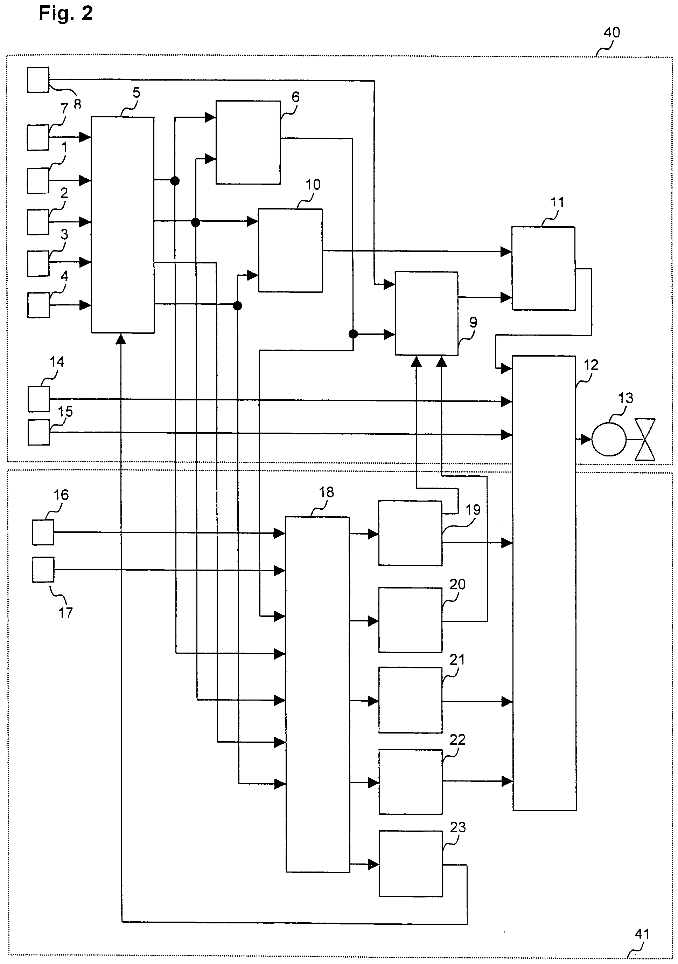

Fig. 2 zeigt ein schematisches Blockdiagramm eines Reglers gemäß einem Ausführungsbeispiel. Der Regler 40 für den Kältekreis der Kältemaschine weist eine Messwerterfassungs- und -verarbeitungseinheit 5, eine Berechnungseinheit 6, eine Modellbildeeinheit 10, eine erste Bestimmungseinheit 9, eine zweite Bestimmungseinheit 11 sowie eine Auswahleinheit 12 auf. Der Regler 40 dient dabei als Überhitzungsregler für den Kältekreis.

Die Messwerterfassungs- und -verarbeitungseinheit 5 zur Messwerterfassung und Messwertverarbeitung rechnet die elektrischen Signale der an den Regler angeschlossenen Sensoren (Messeinheiten) 1 - 4 in Messwerte um und befreit sie ggf. von Störeinflüssen wie eine 50 Hz-Überlagerung. Die erste Bestimmungseinheit 9 bestimmt einen ersten Stellwert W₁ für das Expansionsventil 13 in Abhängigkeit von der Abweichung einer Ist-Überhitzung und einer Soll-Überhitzung des Kältemittels. Die Berechnungseinheit 6 berechnet die momentane Ist-Überhitzung des Kältemittels am Verdampferausgang aus dem Verdampferdruck und der Verdampferausgangstemperatur. Aus dem Vergleich der Ist-Überhitzung mit der Soll-Überhitzung wird der erste Stellwert W₁ für das Expansionsventil 13 in der ersten Bestimmungseinheit 9 bestimmt. Der erste Stellwert W₁ betrifft den Öffnungsgrad des Expansionsventils 13, so dass der Kältemittellauf im Kreislauf reguliert wird. Wenn die Ist-Überhitzung größer als die Soll-Überhitzung ist, so fährt das Stellorgan auf, d. h. das erste Stellsignal wird größer. Ist die Ist-Überhitzung kleiner als die Soll-Überhitzung, so fährt das Stellorgan zu, d. h. das erste Stellsignal wird kleiner. Der Regler kann dabei als P-, PI-, I- oder PID - Regler ausgeführt sein.

Eine Modellbilde-Einheit 10 dient dazu, ein Modell zu bilden, welches den Kältemittelmassenstrom am Verdampfereingang mit dem Kältemittelmassenstrom am Verdampferausgang vergleicht und einen zweiten Stellwert W₂ für das Expansionsventil 13 anhand des Modells aus dem Verdampferdruck, dem Verflüssigerdruck und kältekreisspezifischen Größen berechnet.

Eine zweite Bestimmungseinheit 11 dient dazu, einen dritten Stellwert W₃ für das Expansionsventil 13 durch Verknüpfung des ersten Stellwerts W₁ mit dem zweiten Stellwert W₂ zu bestimmen. Eine Stelleinheit zum Einstellen des Expansionsventils 13 auf den dritten Stellwert W₃ wird ebenfalls vorgesehen.

Eine Auswahleinheit 12 dient der Auswahl des Stellsignals in Abhängigkeit der Betriebsart des Kältekreisreglers und schaltet in Abhängigkeit von der Betriebsart des Kältekreisreglers Stellsignale aus unterschiedlichen Quellen an das Expansionsventils 13 weiter. In der Betriebsart Heizen wird das Stellsignal aus der zweiten Bestimmungseinheit 11 zum Bestimmen eines dritten Stellwertes W₃ an das Expansionsventil 13 weitergeschaltet. In der Betriebsart Stand-by wird das Stellsignal mit Null Prozent Öffnungsgrad an das Expansionsventil 13 weitergeschaltet. In der Betriebsart Abtauen wird das Stellsignal aus der Bestimmungseinheit zum Bestimmen eines Stellwertes für Abtaubetrieb an das Expansionsventil 13 weitergeschaltet. Der oben beschriebene Regler 40 zum regelungstechnischen Verarbeiten von Prozessgrößen des Kältekreises zur Regelung der Überhitzung und zur Gewinnung eines Stellsignals für ein Expansionsventil ist bereits bekannt und stellt gemäß der Erfindung eine Überhitzungsregler-Grundfunktion dar.

Zusätzlich zu der Überhitzungsregler-Grundfunktion weist der Überhitzungsregler einen Sonderfunktionsregler 41 auf, um Prozessgrößen abhängig von der Betriebsart des Kältekreisreglers und vom Arbeitspunkt des Kältekreises regeltechnisch einzubinden, welche nicht unmittelbar zur Bestimmung und zur Regelung der Überhitzung durch den Regler 40 erforderlich sind. Ferner kann eine Selbstdiagnose des Kältekreisreglers und des Kältekreises und seiner Komponenten im Regler implementiert werden.

Das Zusammenspiel der Funktionen und der Datenfluss zwischen den einzelnen Funktionsblöcken wird nachfolgend detaillierter beschrieben:
Der Sonderfunktions-Regler 41 für die Sonderfunktionen des Kältekreises weist eine Erkennungseinheit 18, eine Heißgastemperaturbegrenzungseinheit 19, eine Adaptionseinheit 20, eine Druckdifferenzsteuerungseinheit 21, eine Verdampferabtaueinheit 22 und eine Überhitzungsregelungseinheit 23 auf. Der Sonderfunktions-Regler 41 für die Sonderfunktion des Kältekreises dient dazu, den Kältekreis zu regeln, wenn besondere Betriebsarten oder Betriebsbedingungen des Kältekreises auftreten.

Die Erkennung des Bedarfes zur Einbindung von Prozessgrößen oder zusätzlichen Regelfunktionen zur Optimierung der Kältekreisregelung erfolgt in der Erkennungseinheit 18, welche auch zur Auswahl und Aktivierung derjenigen Einheiten dient, welche für die Regelung der Sonderfunktionen und deren Einflussnahme auf den Regler benötigt werden.

Die Einheiten für die Regelung der Sonderfunktionen sind die Einheiten 19, 20, 21 und 22 und 23. Im gegebenen Fall werden eine oder mehrere Einheiten durch die Erkennungseinheit 18 aktiviert und mit Prozessgrößen versorgt. In den Einheiten für die Regelung der Sonderfunktionen 19, 20, 21, 22, 23 sind jeweils die Regelalgorithmen abgelegt, welche Stellgrößen mit Hilfe der Prozessgrößen und mit den in dem Regler festgelegten Reglerparametern berechnen. Diese Stellgrößen nehmen Einfluss u. A. auf die Stellsignalberechnung für das Expansionsventil 13, auf die Parametrierung und Reglerarchitektur und auf die Steuerung der Betriebsart der Überhitzungsregler-Grundfunktion durch den Regler 40. Weiterhin ist es möglich, die Funktion der Erkennungseinheit 18 für die Auswahl und Aktivierung der Einheiten für die Sonderfunktionen mit in die Sonderfunktionsblöcke einzubinden, so dass diese ihre Funktionen selbsttätig aktivieren oder deaktivieren.

Die Heißgastemperaturbegrenzungseinheit 19 steuert die Heißgastemperaturbegrenzung gemäß einem zweiten Ausführungsbeispiel. Ziel ist es dabei, die Heißgastemperatur 16, welche mit einem Temperaturfühler am Verdichterausgang ermittelt wird, in kritischen Arbeitspunkten des Kältekreises zu begrenzen, ohne dabei den Verdichter abschalten zu müssen. Die Abhängigkeit der Heißgastemperatur vom Arbeitpunkt des Kältekreises ist üblicherweise dergestalt, dass die Heißgastemperatur sowohl mit steigendem Verflüssigerdruck als auch mit fallendem Verdampferdruck steigt. Weiterhin steigt sie mit steigender Überhitzung des Kältemittels am Verdampferausgang.

Während der Verdichter gemäß dem Stand der Technik bei einer Schwellwertüberschreitung der Heißgastemperatur unmittelbar abgeschaltet wird, wird hier eine Abschaltung zumindest verzögert, indem der Regler 40 des Kältekreises zunächst die Heißgastemperatur durch Veränderung seines Arbeitspunktes absenkt und somit eine längere Verdichterlaufzeit ermöglicht. Hierzu wird eine weitere Heißgasgrenztemperatur HG2 für die Aktivierung der Sonderfunktion Heißgastemperaturbegrenzung unterhalb der Heißgasgrenztemperatur HG1 für das Abschalten des Verdichters parametriert. Wenn die gemessene Heißgastemperatur die Heißgasgrenztemperatur HG2 überschreitet, aktiviert die Einheit 18 die Heißgastemperaturbegrenzungseinheit 19. Bei einem Unterschreiten der Temperatur HG2 wird die Einheit 19 wieder deaktiviert. Diese Schwelle kann mit einer Hysterese ausgestattet sein.

Die Begrenzung der Heißgastemperatur kann durch die Heißgastemperaturbegrenzungseinheit 19 auf unterschiedliche Weise gesteuert werden: Zum einen kann der Sollwert für die Überhitzung am Verdampferausgang bei aktivierter Heißgastemperaturbegrenzung auf einen kleineren für die Regelung des Kältekreises noch tolerablen Sollwert umgeschaltet werden. Eine direkte Umschaltung oder auch rampenförmige Umschaltung des Überhitzungssollwertes erzeugt ggf. Reglerinstabilitäten, die bei der Wahl des Wertes berücksichtigt werden müssen. Alternativ dazu kann bei einem Rekuperator im Kältekreis und bei einer aktivierten Heißgastemperaturbegrenzung die Regelung der Überhitzung am Verdampferausgang auf die Regelung der Überhitzung am Rekuperatorausgang umgeschaltet werden. In diesem Betriebszustand wird dann die Überhitzung des Kältemittels am Rekuperatorausgang geregelt.

Ein Rekuperator stellt hierbei einen Wärmeaustauscher dar, der das den Verdampfer verlassende Kältemittel nacherwärmt und damit seine Überhitzung erhöht. In vielen Arbeitspunkten des Kältekreises, insbesondere bei einer aktivierten Heißgastemperaturbegrenzung, ist es beim Umschalten auf die Rekuperatorregelung möglich, die Überhitzung des Kältemittels am Verdampferausgang soweit zu verringern, dass sie dort nahe Null Kelvin ist und die Überhitzung des Kältemittels in den Rekuperator hineinverlagert wird. Mit der Verringerung der Verdampferüberhitzung geht eine erwünschte Reduzierung der Heißgastemperatur einher.

Als weitere regelungstechnische Variante zur Reduzierung der Heißgastemperatur kann ein Heißgastemperaturregler eingesetzt werden, der in Abhängigkeit des Heißgastemperatur-Istwertes und der Heißgasgrenztemperatur HG2 sowie in Abhängigkeit eines bei überschrittener Heißgasgrenztemperatur HG2 beginnendem Proportionalbandes ein Stellsignal berechnet, welches mit dem Stellsignal des Überhitzungsreglers 11 kombiniert wird. Diese Verknüpfung kann beispielsweise derart vorgenommen werden, dass der Heißgastemperaturregler in Abhängigkeit der Differenz von Heißgastemperatur-Istwert und der Heißgasgrenztemperatur HG2 ein Stellsignal ausgibt. Wenn der Heißgastemperatur-Istwert kleiner oder gleich der Heißgasgrenztemperatur HG2 ist, dann ist das Stellsignal gleich eins. Wenn der Heißgastemperatur-Istwert jedoch größer als die Heißgasgrenztemperatur HG2 ist, so erhöht sich das Stellsignal mit steigender Differenz. Dieses Stellsignal wird mit dem Stellsignal des Überhitzungsreglers 11 multipliziert und dann an das Expansionsventil 13 weitergeleitet.

Optional kann der Integralanteil des Überhitzungsreglers 9 in der weiteren Integration angehalten werden, um eine Fehlintegration während der Aufschaltung des Heißgasreglers zu verhindern, wenn das Stellsignal des Heißgastemperaturreglers größer als 1 ist.

Gemäß einem alternativen Ausführungsbeispiel zum zweiten Ausführungsbeispiel kann es sein, dass der ermittelte Istwert für die Überhitzung am Rekuperatorausgang während der beschriebenen aktiven Heißgastemperaturbegrenzung überwacht wird und beim Unterschreiten eines Grenzwertes der Verdichter abgeschaltet wird.

Die Heißgastemperaturbegrenzung kann ebenfalls erfolgen, indem ein zusätzliches Stellsignal für ein weiteres Stellglied berechnet wird, beispielsweise ein Stellsignal für ein Einspritzventil, welches Kältemittel in einen zusätzlichen Eingang am saugseitigen Eingang des Verdichters einspritzt. Bei einem Scrollverdichter besteht so beispielsweise die Möglichkeit, einen Kältemittelnebenstrom während des Kompressionsvorganges des Hauptkältemittelstromes über Bohrungen in die Scrolleinheit einzuspritzen, womit eine Effizienzsteigerung des Kompressionsvorganges einhergehen kann. Eine Beeinflussung des Aggregatzustandes und der Kältemittelmenge durch den Regler der Heißgastemperaturbegrenzung mit Hilfe eines Stellorgans zur Dosierung des Kältemittelnebenstromes kann zur Reduzierung der Heißgastemperatur verwendet werden.

Die Regelung erfolgt dabei nach folgender Maßgabe: Ist die Heißgastemperaturregelung nicht aktiv, regelt der Überhitzungsregler das Stellorgan für den Kältemittelnebenstrom auf eine Überhitzung des Kältemittels im Kältemittelnebenstrom, welche für eine möglichst gute Effizienz des Kältekreises festgelegt wurde. Ist die Heißgastemperaturregelung jedoch aktiv, dann regelt der Heißgastemperaturregler das Stellorgan für den Kältemittelnebenstrom auf eine Überhitzung des Kältemittels im Kältemittelnebenstrom, welche für eine Reduzierung der Heißgastemperatur festgelegt wurde bzw. passt die Überhitzung des Kältemittels im Kältemittelnebenstrom an die Differenz zwischen Heißgastemperaturmesswert und Heißgastemperaturgrenzwert an.

Gemäß der Erfindung dient die Adaptionseinheit 20 der Steuerung der Adaption der Reglerdynamik. Ziel ist es dabei, die Parametrierung des Reglers für die Überhitzung des Kältemittels am Verdampferausgang 9 optimal an den aktuellen Arbeitspunkt der Regelstrecke Kältekreis anzupassen. Zum einen ist die Übertragungskennlinie eines Kältekreises davon geprägt, dass die Steilheit der Abhängigkeit zwischen Öffnungsgradänderung des Expansionsventils und Überhitzungsänderung des Kältemittels am Verdampferausgang nicht konstant ist. Üblicherweise geht eine Öffnungsgradänderung des Expansionsventils bei Arbeitspunkten mit großen Überhitzungen mit einer kleineren Überhitzungsänderung des Kältemittels am Verdampferausgang einher als bei Arbeitspunkten mit kleinen Überhitzungen der Fall ist.

Eine optimale Anpassung des Reglers an den aktuellen Arbeitspunkt des Kältekreises erfolgt durch Anpassung der Parametrierung des Reglers für die Überhitzung des Kältemittels am Verdampferausgang 9. Die Freigabe der Sonderfunktion Adaption der Reglerdynamik wird durch die Einheit 18 gesteuert. Die Freigabe erfolgt beispielsweise nur im Heizbetrieb und/oder Kühlbetrieb und ggf. erst nach einer verstrichenen Verzögerungszeit nach Betriebsartwechsel. In der Adaptionseinheit 20 zur Adaption der Reglerdynamik ist eine Kennlinie abgelegt, welche die Reglerparameter in der Einheit 9 in Abhängigkeit des Sollwertes der Überhitzung des Kältemittels am Verdampferausgang beeinflusst. Hierbei können alle Anteile des Reglers (beispielsweise P- , I- und D-Anteil) gleichzeitig mit demselben Faktor beeinflusst werden. Ferner ist es aber auch möglich, nur ausgewählte Anteile zu beeinflussen. Ziel ist es dabei, einer Änderung der Streckenverstärkung des Kältekreises entgegenzuwirken, d. h. vergrößert die Strecke in einem Arbeitspunkt mit geringerer Sollüberhitzung ihre Verstärkung, so wird die Beeinflussung der Reglerparameter zum Ziel haben, in diesem Arbeitspunkt die Reglerverstärkung zu verringern, so dass die Gesamtverstärkung des Regelkreises in etwa konstant ist.

Um ein Schwingen oder eine gegenseitige Beeinflussung des Reglers für die Überhitzung des Kältemittels am Verdampferausgang 9 durch die Adaptionseinheit 20 zur Adaption der Reglerdynamik zu reduzieren, kann es erforderlich sein, dessen berechnetes Ausgangssignal für die Anpassung der Reglerdynamik einer Dämpfung zu unterziehen. Diese Dämpfung kann durch eine Begrenzung der Stellsignalveränderung pro Zeiteinheit oder durch ein Tiefpassfilter gebildet werden. Eine langsame Änderung der Regelparameter des Reglers für die Überhitzung des Kältemittels am Verdampferausgang 9 gibt diesem auch die nötige Zeit, keine Stellsignalsprünge während der Parameteränderungen zu produzieren, sondern kontinuierlich das Stellsignal für das Expansionsventil an die geänderten Reglerbedingungen anzupassen.

In der Adaptionseinheit 20 zur Adaption der Reglerdynamik kann eine weitere Kennlinie abgelegt sein, welche die Reglerparameter in der Einheit 9 in Abhängigkeit des Absolutwertes der Regelabweichung der Überhitzung des Kältemittels am Verdampferausgang beeinflusst. Dieses Verfahren hat das Ziel, die Regelparameter an die jeweiligen Erfordernisse anzupassen, indem beim Einregelvorgang bei Sollwertsprüngen oder beim Einwirken von dynamisch ändernden Störgrößen die Verstärkung des Reglers vorteilhaft höher sein sollte als im eingeschwungenen Zustand mit nur geringer Regelabweichung.

Diese Kennlinie in der Adaptionseinheit 20 beschreibt die Änderung der Reglerverstärkung in Abhängigkeit des Absolutwertes der Regelabweichung der Überhitzung des Kältemittels am Verdampferausgang. Um ein Schwingen oder eine gegenseitige Beeinflussung des Reglers für die Überhitzung des Kältemittels am Verdampferausgang 9 durch die Einheit 20 zur Adaption der Reglerdynamik zu reduzieren, kann es erforderlich sein, dessen berechnetes Ausgangssignal für die Anpassung der Reglerdynamik einer Dämpfung zu unterziehen. Dies ist insbesondere auch deshalb zweckmäßig, da bei schwingendem Regler der Absolutwert der Regelabweichung der Überhitzung des Kältemittels am Verdampferausgang zyklisch den Wert Null annimmt und ohne Dämpfung des Stellwertes der Einheit 20 im selben Takt die Reglerparameter von der Einheit 9 variiert würden.

Gemäß einem Ausführungsbeispiel wird das erste Stellsignal in Abhängigkeit des Überhitzungssollwertes und das zweite Stellsignal der Einheit 20 in Abhängigkeit des Absolutwertes der Regelabweichung der Überhitzung am Verdampferausgang miteinander zu einem Gesamtstellsignal verknüpft. Dies kann vorteilhaft durch Bildung des Mittelwertes der Signale oder durch Bildung des Maximums der Signale erfolgen. Ferner ist es vorteilhaft, den möglichen Stellbereich dieses Signals durch Festlegung eines Minimalwertes und eines Maximalwertes einzuschränken.

Gemäß einem weiteren Ausführungsbeispiel dient die Druckdifferenzsteuerungseinheit 21 der Druckdifferenzsteuerung während der Betriebsart Verdampferabtauung. Voraussetzung dafür ist es, dass die Abtauung als Umkehrabtauung durchgeführt wird, bei der Verdampfer und Verflüssiger bei der Abtauung durchströmt werden. Ziel ist es dabei, die Druckdifferenz zwischen Verdampferdruck 2 und Verflüssigerdruck 4 während des Abtauvorganges des Verdampfers zu regeln und somit optimal an den aktuellen Arbeitspunkt des Verdichters und des Kältekreises anzupassen.

Vorteilhaft dabei ist die Nutzung des auch für den Heizbetrieb zur Kältemittelregelung verwendeten Expansionsventils. Gemäß dem Stand der Technik wird der Abtauvorgang mit einem Drosselglied mit einer während des Abtauvorganges konstanten Drosselfunktion durchgeführt. Vorteilhaft ist es auch, die Drosselwirkung des Drosselorgans während des Abtauvorganges optimal an den aktuellen Arbeitspunkt des Verdichters und des Kältekreises anzupassen. Dies kann wie folgt erfolgen: Ist die Betriebsart des Kältekreises der Verdampferabtaubetrieb, so wird die Sonderfunktion Druckdifferenzsteuerung Verdampferabtauung durch die Einheit 18 aktiviert. In Einheit 19 ist ein Sollwert für eine Druckdifferenzsteuerung von Verflüssigerdruck zu Verdampferdruck sowie eine Kennlinie hinterlegt, welche in Abhängigkeit von Druckdifferenz-Sollwert und Druckdifferenz-Istwert ein Stellsignal für den Öffnungsgrad eines Expansionsventils für den++ Abtaubetrieb ermittelt.

Weiterhin ist es möglich, einen im Regler festgelegten Stellwert des Expansionsventils für den Abtaubetrieb 15 mit dem Stellsignal der Einheit 21 zu verknüpfen. Diese Verknüpfung kann beispielsweise dergestalt sein, dass der Druckdifferenzregler in Abhängigkeit der Differenz von Druckdifferenz-Sollwert und Druckdifferenz-Istwert ein Stellsignal ausgibt. Ist der Druckdifferenz-Istwert größer oder gleich dem Druckdifferenz-Sollwert, ist das Stellsignal gleich eins, ist der Druckdifferenz-Istwert kleiner als der Druckdifferenz-Sollwert, so reduziert sich das Stellsignal mit steigender Differenz. Dieses Stellsignal wird mit dem im Regler festgelegten Stellwert des Expansionsventils für den Abtaubetrieb multipliziert und dann an das Expansionsventil weitergeleitet. Die Aktivierung dieser Druckdifferenzregelfunktion kann vorteilhaft auch erst nach Verstreichen einer festgelegten Zeitspanne nach Beginn der Abtauung erfolgen.

Gemäß einem weiteren Ausführungsbeispiel dient die Verdampferabtauungseinheit 22 der Verdampferabtauung zur Eisschmelze. Voraussetzung dafür ist es, dass der Verdampfer im Betrieb durch das Kondensieren und Festfrieren von in der Luft enthaltenem Wasserdampf abgetaut werden muss. Gemäß dem Stand der Technik wird bei einer Erkennung des Abtaubedarfes für den Verdampfer die Betriebsart des Kältekreises direkt in den Abtaubetrieb umgeschaltet und nach der Vollendung des Abtaubetriebes die Betriebsart des Kältekreises wieder unmittelbar in den Heizbetrieb umgeschaltet. Die Abtauung kann dabei sowohl als Heißgasabtauung (das aus dem Verdichter austretende Heißgas durchströmt den Verdampfer direkt und wird danach zur Saugseite des Verdichters zurückgeführt) oder Umkehrabtauung (Verdampfer und Verflüssiger werden bei der Abtauung gleichermaßen von Kältemittel durchströmt) durchgeführt werden. Ziel eines Abtauvorganges ist es, das gesamte am Verdampfer befindliche Eis zu schmelzen und das Schmelzwasser abzuführen. Bei einer nach dem Stand der Technik üblichen unmittelbaren Umschaltung von Abtaubetrieb auf Heizbetrieb kann es vorkommen, dass ein Teil des sich während des Abtauens bildenden Schmelzwassers nach dem Übergang von der Betriebsart Abtaubetrieb zur Betriebsart Heizen am Verdampfer oder in seiner Nähe wieder festfriert.

Beim Alternieren der Betriebsart Abtaubetrieb/Heizbetrieb kann sich bei bestimmten klimatischen Umgebungsbedingungen auf diese Weise eine wachsende Vereisung zumindest von Teilen des Verdampfers bilden, welcher von Abtauung zu Abtauung wächst. Abhängig von der Art und Einstellung der Abtauendetektion wird ein Abtauvorgang gegebenenfalls auch dann für beendet angesehen, wenn diese partielle Vereisung nicht vollständig abgetaut ist.

Hier wird ein Verfahren vorgesehen, welches in der Lage ist, diese partielle Vereisung wieder abzubauen bzw. den Aufbau einer partiellen Vereisung nach erfolgtem Abtauvorgang zu verhindern. Die Einheit 22 steuert diese Funktion, indem zumindest zyklisch ein geplanter direkter Übergang von der Betriebsart Abtauen zur Betriebsart Heizen gesperrt wird, indem ein befristetes Verweilen in der Betriebsart Stand-by eingeschoben wird. Weiterhin ist es möglich, dass beim geplanten Übergang der Betriebsart Heizen nach Betriebsart Stand-by (Verdichter aus) durch die Einheit 22 ein befristetes Verweilen in der Betriebsart Abtauen eingeschoben wird. Ein geplanter Übergang bedeutet hier, dass ein Betriebsartregelsystem, welches die Funktion der Einheit 22 nicht berücksichtigt, einen solchen Übergang steuern würde, beispielsweise in Abhängigkeit einer Wärmeanforderung des Wärmemengenreglers oder einer Abtauanforderung/Beendung des Abtaureglers.

In beiden Ausführungsmöglichkeiten schließt sich unmittelbar an den Abtauvorgang ein befristetes Verharren im Ruhebetrieb (Stand-by, Verdichter aus) an. Dabei wird vorteilhaft ausgenutzt, dass während einer Abtauung thermische Energie in den Verdampfer eingetragen wird, welche nach Beendung des Abtauens im Verdampferblock gespeichert ist.

Vorteilhaft befindet sich der Verdampfer konstruktiv in einer Kammer, welche eine direkte Abgabe dieser thermischen Energie an die Wärmepumpenumgebung reduziert, sodass zunächst die Energie hauptsächlich zur Beheizung der Kammer dient. Vorteilhaft ist auch eine Auskleidung der Kammer mit Wärme dämmenden Materialien. Die Abgabe von Wärmeenergie vom Verdampfer an die Kammer schmilzt die in der Kammer gebildete Eisreste, welche unmittelbar nach dem Abtauen noch vorhanden sind und bei einem direkten Umschalten vom Abtaubetrieb nach Heizbetrieb wieder festfrieren würden. Eine Aktivierung einer solchen Sonderfunktion kann an einen außentemperaturabhängigen Zyklus gekoppelt werden, welcher in Versuchsreihen empirisch ermittelt wird. Der Zyklus beschreibt in Abhängigkeit der Außentemperatur, der Verdichterlaufzeit etc., wann die Sonderfunktion der Verdampferabtauung Eisschmelze aktiviert wird und auf welchen Zeitraum die Dauer der Aktivierung dieser Funktion befristet wird. Eine Steuerung des Zyklus kann durch die Einheit 18 erfolgen oder direkt in der Einheit 22 umgesetzt sein.

Eine weitere Ausgestaltungsmöglichkeit ist es, insbesondere bei Außentemperaturen oberhalb des Gefrierpunktes folgende Sonderalgorithmik einzufügen. So wird zum Ausblasen von Schmelzwassertropfen aus den Verdampferlamellen zumindest zyklisch ein geplanter direkter Übergang von der Betriebsart Abtauen zur Betriebsart Heizen gesperrt, indem durch die Einheit 22 ein befristetes Verweilen in der Betriebsart Stand-by mit eingeschaltetem Verdampferlüfter eingeschoben bzw. vorgesehen wird.

Eine weitere Ausgestaltungsmöglichkeit bei Außentemperaturen oberhalb des Gefrierpunktes von Wasser ist es, dass in der Betriebsart Stand-by (Verdichter aus) durch die Einheit 22 ein befristetes Verweilen in der Betriebsart Stand-by mit eingeschaltetem Verdampferlüfter eingeschoben wird. Die Lüfterdrehzahl kann bei drehzahlsteuerbarem Lüfter in dieser Betriebsart auch in Bezug zur Lüfterdrehzahl für den Heizbetrieb abgesenkt werden. Der Luftvolumenstrom oberhalb des Gefrierpunktes von Wasser taut den Verdampfer oder die den Verdampfer umgebende Kammer ab.

Gemäß eines weiteren Ausführungsbeispiel steuert die Einheit 23 die Sonderfunktion Überhitzungsregelung des Kältemittels am Rekuperatorausgang. Ziel ist es dabei, durch eine Umschaltung des Reglers für die Regelung der Überhitzung des Kältemittels am Verdampferausgang, kurz Verdampferüberhitzungsregelung, auf eine Regelung der Überhitzung des Kältemittels am Rekuperatorausgang, kurz Rekuperatorüberhitzungsregelung, optimal an den aktuellen Arbeitspunkt der Regelstrecke Kältekreis anzupassen und ggf. die Leistungszahl des Kältekreises zu erhöhen. Durch eine Regelung der Überhitzung des Kältemittels am Rekuperatorausgang ist es möglich, die Überhitzung des Kältemittels am Verdampferausgang regeltechnisch stabil so zu reduzieren, dass diese bei bestimmten Einsatzbedingungen (große Differenz zwischen Verdampferdruck und Verflüssigerdruck) auch einen Wert von Null annehmen kann. In diesem Fall findet die vollständige Überhitzung des Kältemittels im Rekuperator statt, was die Regelstreckenparameter Steilheit und Verzögerungszeiten jedoch beeinflusst.

Erfindungsgemäß wird die Aufgabe der Überhitzungsregelung des Kältemittels am Rekuperatorausgang durch Anpassung der Parametrierung des Reglers für die Überhitzung des Kältemittel und Umschaltung der Regelgröße durch folgendes Verfahren gelöst:
Die Freigabe der Sonderfunktion Regelung der Überhitzung des Kältemittel am Rekuperatorausgang wird durch Block 18 gesteuert. Die Freigabe erfolgt beispielsweise nur im Heizbetrieb und / oder Kühlbetrieb und ggf. erst nach einer verstrichenen Verzögerungszeit nach Betriebsartwechsel. Weiterhin erfolgt eine Freigabe nur, wenn der Betrieb der Rekuperatorüberhitzungsregelung regelungstechnisch stabil und energetisch in Bezug auf Leitungszahl des Kältekreises sinnvoll ist. Maß dabei kann die im Rekuperator übertragene Energie sein, welche maßgeblich durch die Temperaturunterschiede der zwei Kältemittelwege zueinander beeinflusst wird.

Da die Temperatur im Naßdampfgebiet eines Kältemittels mit dem Druck korreliert, kann zur Freigabe des Betriebes der Rekuperatorüberhitzungsregelung die Überschreitung eines Druckunterschiedes zwischen Verflüssiger - und Verdampferdruck, die Überschreitung eines Temperaturunterschiedes zwischen Verflüssiger - und Verdampfertemperatur oder kombinierte Verfahren verwendet werden.

Weiterhin ist die Freigabe des Betriebes der Rekuperatorüberhitzungsregelung dann möglich, wenn der Verflüssigerdruck einen festgesetzten Grenzwert überschreitet und der Verdampferdruck einen festgesetzten Grenzwert unterschreitet oder alternativ die Verflüssigertemperatur einen festgesetzten Grenzwert überschreitet und die Verdampfertemperatur einen festgesetzten Grenzwert unterschreitet oder kombinierte Verfahren.

Eine Rückschaltung in den Betrieb der Verdampferüberhitzungsregelung erfolgt dann, wenn aufgrund der Prozesswertekonstellation die Bedingungen für die Freigabe der Rekuperatorüberhitzungsregelung nicht mehr erfüllt sind, dem Schaltpunkt kann eine Hysterese überlagert werden.

Die Einheit 23 steuert, welche der Reglerparameter in Block 9 bei einer Umschaltung von Regelgröße Verdampferüberhitzung des Kältemittels auf Rekuperatorüberhitzung des Kältemittels beeinflusst werden. Ein Ausführungsmerkmal kann es sein, dass alle Anteile des Reglers (beispielsweise P-, I- und D- Anteil) gleichzeitig mit demselben Faktor beeinflusst werden, es ist aber auch möglich, nur ausgewählte Anteile zu beeinflussen.

Vorteilhafterweise wird bei einer Umschaltung von Regelgröße Verdampferüberhitzung des Kältemittels auf Rekuperatorüberhitzung des Kältemittels auch die Sollwertvorgabe für die Überhitzung beeinflusst im Allgemeinen gilt für die Regelung der Rekuperatorüberhitzung ein höherer Sollwert als für die Regelung der Verdampferüberhitzung.

Weiterhin kann es vorteilhaft sein, bei der Regelung der Rekuperatorüberhitzung den Istwert der Überhitzung des Kältemittel am Rekuperatorausgang mit einem Anteil des Istwert des der Überhitzung des Kältemittel am Verdampferausgang zu verrechnen. Addiert man beispielsweise eine festgelegten Prozentsatz des Istwertes der Überhitzung des Kältemittel am Verdampferausgang zum Istwert der Überhitzung des Kältemittel am Rekuperatorausgang hinzu, so gewinnt man eine kombinierte Regelgröße. Vorteilhaft ist dabei, dass diese kombinierte Regelgröße sowohl Anteile der eigentlichen Regelzielgröße (Rekuperatorüberhitzung) enthält, welche aber durch eine große Streckenzeitkonstante gedämpft wird als auch Anteile einer zweiten Größe enthält (Verdampferüberhitzung), welche eine durch eine deutlich geringere Streckenzeitkonstante gedämpft wird und so die Tendenz der Streckenreaktion besser abbildet.

Bei der oben beschriebenen Heißgastemperaturbegrenzung wird die Heißgastemperatur betrachtet, obwohl sie nicht direkt mit der Überhitzungsregelung zusammenhängt. Eine Betrachtung der Heißgastemperatur ist jedoch hinsichtlich der Sicherheit der Kälteanlage von Vorteil. Die Heißgastemperatur stellt die Temperatur dar, mit der das komprimierte Druckgas den Verdichter verlässt. Diese Temperatur beeinflusst die Lebensdauer des Öls des Verdichters. Dieses Öl weist typischerweise eine Maximaltemperatur auf, oberhalb welcher sich die Moleküle des Öls in ihre Bestandteile auflösen. Die Heißgastemperatur stellt die heißeste Temperatur in dem Kältekreis dar. Diese Temperatur ist abhängig von den beiden Drücken, d.h. Hoch- und Niederdruck. Ferner spielt die Güte des Verdichters eine Rolle bei der Heißgastemperatur.

Das vorstehend beschriebene Expansionsventil ist erfindungsgemäß als ein eletronisch einstellbares Drossselorgan ausgebildet.

## Patentansprüche

1. Verfahren zum Steuern einer Kälteanlage mit einem Kältemittel, einem Verdampfer (31), einem Verdichter (32), einem Verflüssiger (33) und einem elektronisch einstellbaren Drosselorgan (13), mit den Schritten:
Durchführen einer Überhitzungsregelung des Kältemittels am Verdampferausgang, durch einen Regler (40) durch Steuern des Öffnungsgrades des elektronisch einstellbaren Drosselorgans (13),
Aktivierung einer Sonderfunktions-Regelung durch einen Sonderfunktionsregler (41), wenn sich die Kälteanlage in bestimmten Betriebsarten befindet, **dadurch gekennzeichnet, dass**
die Sonderfunktions-Regelung des Sonderfunktionsreglers (41) in die Überhitzungsregelung des Kältemittels am Verdampferausgang durch den Regler (40) eingreift, wobei
eine Adaptionseinheit (20) der Steuerung der Adaption des Reglers (40) dient,
die Parametrierung des Reglers (40) für die Überhitzung des Kältemittels am Verdampferausgang optimal an den aktuellen Arbeitspunkt der Regelstrecke Kältekreis angepasst wird,
eine Kennlinie in der Adaptionseinheit (20) zur Adaption der Reglerdynamik abgelegt ist, welche die Reglerparameter in einer ersten Bestimmungseinheit (9) in Abhängigkeit des Sollwertes der Überhitzung des Kältemittels am Verdampferausgang beeinflusst,
eine optimale Anpassung des Reglers (40) an den aktuellen Arbeitspunkt des Kältekreises durch Anpassung der Parametrierung des Reglers (40) für die Überhitzung des Kältemittels am Verdampferausgang erfolgt,
eine Freigabe der Sonderfunktion Adaption der Reglerdynamik durch eine Erkennungseinheit (18) gesteuert wird und
Beenden der Sonderfunktions-Regelung, wenn die Kälteanlage wieder in den Normalbetrieb, bei dem eine Überhitzungsregelung des Kältemittels am Verdampferausgang durch den Regler (40) erfolgt, wechselt.

2. Verfahren nach Anspruch 1, wobei die Sonderfunktions-Regelung der Regeldynamik nach einer Verzögerungszeit nach einem Wechsel der Betriebsart aktiviert bzw. freigegeben wird, wobei
eine weitere Kennlinie zur Beeinflussung der Regelparameter vom Regler (40) zur Überhitzungsregelung am Verdampferausgang vorgesehen wird.

3. Verfahren nach Anspruch 2, wobei die Regelung durch den Regler (40) basierend auf einer Adaption der Regeldynamik einer Dämpfung unterzogen wird.

## Claims

1. A method of controlling a refrigeration system comprising a refrigerant, an evaporator (31), a compressor (32), a condenser (33), and an electronically adjustable throttle device (13), comprising the steps of:
performing superheating control of the refrigerant at the evaporator outlet via a controller (40) by controlling the opening degree of the electronically adjustable throttle device (13),
activation of a special function control via a special function controller (41) when the refrigeration system is in specific operating states, **characterised in that**
the special function control of the special function controller (41) intervenes in the superheating control of the refrigerant at the evaporator outlet via the controller (40), wherein
an adaptation unit (20) serves for controlling the adaptation of the controller (40),
parametrisation of the controller (40) for superheating the refrigerant at the evaporator outlet is optimally matched to the current operating point of the refrigerant circuit controlled system,
a characteristic curve for adapting the controller dynamics is stored in the adaptation unit (20), influencing the controller parameters in a first determination unit (9) in dependence of the set value of refrigerant superheating at the evaporator outlet,
optimal matching of the controller (40) to the current operating point of the refrigerant circuit is performed by matching the parametrisation of the controller (40) for superheating of the refrigerant at the evaporator outlet,
enabling the controller dynamics adaptation special function is controlled via a detection unit (18), and
terminating the special function control when the refrigeration system returns to normal operation in which superheating control of the refrigerant at the evaporator outlet is performed via the controller (40).

2. The method according to claim 1, wherein the control dynamics special function control is activated or enabled after a delay time after a change of operating mode, wherein
a further characteristic curve for influencing the control parameters of the controller (40) is provided for superheating control at the evaporator outlet.

3. The method according to claim 2, wherein control via the controller (40) is subjected to damping based on an adaptation of the control dynamics.

## Revendications

1. Procédé destiné à la commande d'une installation de refroidissement comportant un fluide frigorigène, un évaporateur (31), un compresseur (32), un condenseur (33) et un organe d'étranglement (13) réglable de manière électronique, comportant les étapes suivantes :
réalisation d'une régulation de surchauffe du fluide frigorigène à la sortie de l'évaporateur par un régulateur (40), par la commande du degré d'ouverture de l'organe d'étranglement (13) réglable de manière électronique,
activation d'une régulation de fonction spéciale par un régulateur de fonction spéciale (41) quand l'installation de refroidissement se trouve dans certains modes de fonctionnement,
**caractérisé en ce que**
la régulation de fonction spéciale du régulateur de fonction spéciale (41) intervient dans la régulation de surchauffe du fluide frigorigène à la sortie de l'évaporateur par le régulateur (40), étant entendu que
une unité d'adaptation (20) sert à la commande de l'adaptation du régulateur (40),
le paramétrage du régulateur (40) pour la surchauffe du fluide frigorigène à la sortie de l'évaporateur est adapté de manière optimale au point de fonctionnement actuel du système asservi Circuit frigorifique,
une caractéristique, qui influence les paramètres de régulateur dans une première unité de détermination (9) en fonction de la valeur de consigne de surchauffe du fluide frigorigène à la sortie de l'évaporateur, est enregistrée dans l'unité d'adaptation (20) pour l'adaptation de la dynamique de régulation,
une adaptation optimale du régulateur (40) au point de fonctionnement actuel du circuit frigorifique est effectuée par l'adaptation du paramétrage du régulateur (40) pour la surchauffe du fluide frigorigène à la sortie de l'évaporateur, un déblocage de la fonction spéciale Adaptation de la dynamique de régulation est commandé par une unité de reconnaissance (18) ; et
arrêt de la régulation de fonction spéciale quand l'installation de refroidissement repasse en fonctionnement normal, pour lequel une régulation de surchauffe du fluide frigorigène à la sortie de l'évaporateur est effectuée par le régulateur (40).

2. Procédé selon la revendication 1, dans lequel la régulation de fonction spéciale de la dynamique de régulation est activée ou débloquée après un temps de temporisation après un changement de mode de fonctionnement, dans lequel
une autre caractéristique destinée à influencer les paramètres de réglage du régulateur (40) pour la régulation de surchauffe à la sortie de l'évaporateur est prévue.

3. Procédé selon la revendication 2, dans lequel la régulation par le régulateur (40) en fonction d'une adaptation de la dynamique de régulation est soumise à un amortissement.
